# EUROPÄISCHE PATENTSCHRIFT

(11) **EP 3 782 274 B1**
(45) Veröffentlichungstag und Bekanntmachung des Hinweises auf die Patenterteilung: **31.07.2024**
(21) Anmeldenummer: 19734284.3
(22) Anmeldetag: 13.06.2019
(51) Int. Cl.: H02M 3/00, H02M 3/335, H05B 33/02, H05B 45/10, H05B 45/38, H05B 45/39

(54) **BETRIEBSSCHALTUNGEN FÜR LED-LASTEN AUFWEISEND EINE HALBBRÜCKENSCHALTUNG**
OPERATING CIRCUITS FOR LED LOADS COMPRISING A HALF-BRIDGE CIRCUIT
CIRCUIT DE FONCTIONNEMENT POUR CHARGES À LED, PRÉSENTANT UN CIRCUIT EN DEMI-PONT

(30) Priorität: 14.06.2018 DE 102018114271; 24.08.2018 AT 5014418 U
(43) Veröffentlichungstag der Anmeldung: 24.02.2021
(73) Patentinhaber: Tridonic GmbH & Co. KG, 6851 Dornbirn (AT)
(72) Erfinder: KLIEN, Dietmar, 6841 Mäder (AT)
(74) Vertreter: Rupp, Christian
(86) Internationale Anmeldenummer: PCT/EP2019/065595
(87) Internationale Veröffentlichungsnummer: WO 2019/238879

(56) Entgegenhaltungen:
- DE-A1- 102014 202 665
- SHUZE ZHAO ET AL: "A dimmable LED driver for visible light communication (VLC) based on LLC resonant DC-DC converter operating in burst mode", APPLIED POWER ELECTRONICS CONFERENCE AND EXPOSITION (APEC), 2013 TWENTY-EIGHTH ANNUAL IEEE, IEEE, 17 March 2013 (2013-03-17), pages 2144 - 2150, XP032410627, ISBN: 978-1-4673-4354-1, DOI: 10.1109/APEC.2013.6520592

## Beschreibung

Die vorliegende Erfindung bezieht sich grundsätzlich auf den Betrieb von Leuchtmitteln, insbesondere in der Form von LED-Lasten.

In dem Artikel SHUZE ZHAO et al: "A Dimmable LED Driver for Visible Light Communication (VLC) Based on LLC Resonant DC-DC Converter Operating in Burst Mode", Applied Power Electronics Conf. and Exposition (APEC), 2013 28th Annual IEEE, 17. März 2013, Seiten 2144-2150, wird ein dimmbarer LED-Treiber vorgestellt, der auf der LLC-Resonanz-Gleichstrom-Wandlertopologie basiert und ein neues Kommunikationsverfahren, die Visible Light Communication (VLC), implementiert. Der digital gesteuerte LLC-Wandler arbeitet im Konstantstrom-Burst-Modus, wobei der Burst sequenziert wird, um die Dimmung und die Übertragung der Daten mit dem VPPM-Protokoll (Variable Pulse Position Modulation) unabhängig zu steuern.

Aus der WO 2015/121011 A9 ist bereits eine Treiberschaltung für Leuchtmittel, insbesondere für eine oder mehrere LEDs bekannt, bei der die Leuchtmittel mittels eines Resonanzkreises gespeist werden.

Aus der WO 2015/062925 A2 ist eine Leuchtmittel-Betriebsschaltung mit getaktetem Konverter zum digitalen Einstellen einer Farbtemperatur und/oder eines Dimmpegels bekannt.

Aus der WO 2014/0679115 A2 ist ein selbst oszillierender Konverter bekannt.

Allgemein bezieht sich also die Erfindung auf Betriebsschaltung für LED-Lasten, die einen Resonanzkreis, vorzugsweise einen Serienresonanzkreis aufweisen.

Grundsätzlich ist es Trend, die Betriebsfrequenz derartiger LED-Treiber (also die Betriebsfrequenz, mit der der Serienresonanzkreis angeregt wird) zu erhöhen, um somit die Größe der passiven Bauteile zu verringern.

Ein Dimmen derartiger LED-Treiber mit Resonanzkreis kann natürlich durch Frequenzvariation (typischerweise oberhalb der Resonanzfrequenz), aber auch über einen Burst-Mode erfolgen, was bedeutet, dass die hochfrequente, den Resonanzkreis anregende AC-Spannung in Schüben ein- bzw. abgeschaltet wird. Dies wird im Folgenden auch als Niederfrequenz-PWM (LF-PWM) bezeichnet, da die Frequenz dieses Ein- und Abschaltens der hochfrequenten Frequenzpakete relativ niedrig ist im Vergleich zu der genannten hochfrequenten Anregungsfrequenz des Resonanzkreises.

Bei sogenannten Selbst-Schwingern, wie beispielsweise in der WO 2014/067915 A2 gelehrt, ist es im Vergleich zu extern angesteuerten Resonanzkreisen nicht einfach, den Ausgangsstrom und somit die Lichtleistung der LED-Strecke über Frequenz-Variation zu verändern. Daher ist es bekannt, bei derartigen selbstschwingenden Resonanzkreisen die Dimmung, wie auch eine Einstellung des Ausgangsstrombereiches über eine Niederfrequenz-PWM zu erzeugen.

Die Erfindung schlägt nunmehr Lösungen vor, wie LED-Lasten auch mit Hochfrequenz und ggf. mit variabler Frequenz betrieben werden können.

Diese Aufgabe wird gelöst durch die Merkmale des unabhängigen Anspruchs. Die abhängigen Ansprüche bilden den zentralen Gedanken der Erfindung in besonders vorteilhafter Weise weiter.

Gemäß einem Aspekt der Erfindung wird vorgeschlagen eine Betriebsschaltung für eine LED-Last, wobei die Betriebsschaltung eine Halbbrückenschaltung mit zwei in Serie geschalteten Schaltern aufweist. Die Halbbrückenschaltung wird typischerweise ausgehend von einer DC-Spannung versorgt, die beispielsweise durch Gleichrichtern und ggf. Filtern eine AC-Spannung insbesondere einer Netzspannung erzeugt werden kann. Indessen kann die Halbbrückenschaltung beispielsweise auch ausgehend von einer Batterie versorgt werden.

Vom Mittenpunkt der beiden Schalter aus wird ein Serienresonanzkreis versorgt. Weiterhin ist ein Transformator vorgesehen, dessen Streuinduktivität Teil des Resonanzkreises ist oder der mit einer diskreten Resonanzdrossel in Serie liegt, und von dessen Sekundärseite aus Anschlüsse für eine LED-Last versorgt sind.

Gemäß der Erfindung ist eine Steuerschaltung vorgesehen, die die Schalter der Halbbrücke hochfrequent taktet (es liegt somit kein Selbst-Schwinger-Prinzip vor). Dabei überlagert die Steuerschaltung der hochfrequenten Taktung eine in Vergleich dazu niederfrequente PWM-Modulation ("Burst-Mode"). Gemäß einer Realisierung, die der Erfindung nicht zuzurechnen ist, kann die hochfrequente Taktung fixfrequent sein, wobei ein Dimmen einer an den Anschlüssen verbundene LED-Last (also eine Veränderung des Stroms durch die LED-Last) mittels Rückführregelung des Tastverhältnisses der PWM-Modulation auf einen veränderbaren Sollwert erreicht wird. Für die Rückführregelung der Steuerschaltung kann ein einen Strom durch die LED wiedergebendes Signal an die Steuerschaltung zurückgeführt werden.

Gemäß der Erfindung ist die hochfrequente Taktung dabei mittels Vorwärtssteuerung einstellbar. Das Tastverhältnis der PWM-Modulation wird mittels Rückführregelung verändert. Für die Rückführregelung wird der Steuerschaltung ein einen Strom durch die LED-Last wiedergebendes Signal zugeführt.

Die hochfrequente Taktung der Halbbrücke erfolgt vorzugsweise in einem Bereich zwischen 0,5 und 4 MHz, weiter bevorzugt 0,5 bis 2,5 MHz.

Die in Vergleich dazu niederfrequente Frequenz der PWM-Modulation kann in einem Bereich von 10 bis 50 kHz, vorzugsweise 15 bis 25 kHz liegen.

Die Steuerschaltung kann ein Mikrokontroller, ein CMIC (Configurable Mixed Mode Integrated Circuit) oder ein ASIC sein.

Die Erfindung betrifft auch ein Verfahren zum Betreiben einer LED-Last durch eine Halbbrückenschaltung mit zwei in Serie geschalteten Schaltern und einen vom Mittenpunkt der beiden Schalter aus versorgten Serienresonanzkreis, wobei die Schalter der Halbbrücke hochfrequent getaktet werden, wobei der hochfrequenten Taktung der Schalter der Halbbrücke eine im Vergleich dazu niederfrequente PWM-Modulation überlagert wird, wobei die hochfrequente Taktung mittels Vorwärtssteuerung einstellbar ist, und das Tastverhältnis der PWM-Modulation mittels Rückführregelung verändert wird, wobei der Rückführregelung ein einen Strom durch die LED wiedergebendes Signal zugeführt wird.

Weitere Merkmale, Vorteile und Eigenschaften der Erfindung sollen nunmehr bezugnehmend auf die Figuren der beigefügten Zeichnungen erläutert werden.

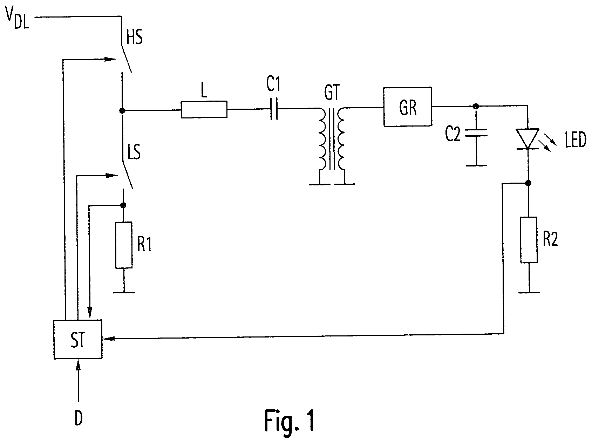

Die Figur 1 zeigt dabei schematisch eine Betriebsschaltung gemäß der vorliegenden Erfindung
Figur 2 zeigt ein Schaltbild einer Betriebsschaltung nach einem Ausführungsbeispiel In der Figur 1 ist eine Halbbrückenschaltung mit zwei in Serie geschalteten Schaltern HS (HS Side, Hochpotential), beziehungsweise LS (Low Side, Niederpotential) gezeigt, die jeweils wechselseitig getaktet werden ausgehend von Steuersignalen, die durch eine Steuerschaltung ST erzeugt sind.

Bekannterweise wird die Halbbrückenschaltung durch eine gleichgerichtete Wechselspannung oder Gleichspannung V_{DC} versorgt.

Der Steuerschaltung ST können externe oder interne Dimmsignale D zugeführt werden, die als Sollwert für den Strom durch eine LED-Strecke LED dienen. An die Halbbrücke schließt sich ein Serienresonanzkreis mit einer Induktivität L und einem Kondensator C1 an, wobei weiterhin ein Transformator GT (galvanische Trennung) vorgesehen ist, dessen Streuinduktivität Teil des Resonanzkreises ist. Gegebenenfalls kann somit auch auf die Induktivität L verzichtet werden, in diesem Fall ist keine diskrete Resonanzdrossel in Serie vorhanden.

Auf der Sekundärseite des Transformators GT liegt üblicherweise eine Gleichrichterschaltung GR vor, die ein elektrisches Speicherelement wie beispielsweise einen weiteren Kondensator C2 speist, dessen Spannung wiederum direkt oder indirekt (beispielsweise über eine weitere Konverterstufe) die LED-Strecke LED versorgt.

Der Steuerschaltung ST können Rückführsignale vom Bereich der Halbbrückenschaltung HS, LS mittels eines Messwiderstands (Shunts) R1 zurückgeführt werden. Weiterhin kann auch ein Rückführsignal ausgehend von einem Shunt R2 in Serie zur LED-Strecke LED zurückgeführt werden, wobei das letztere Messsignal also den Strom durch die LED-Strecke wiedergibt.

Die Steuereinheit ist dazu ausgelegt, neben der hochfrequenten Ansteuerung des Halbbrücken-Wechselrichters HS, LS ein in Vergleich dazu niederfrequentes PWM-Signal zum Überlagen (aufzumodulieren), so dass sich abhängig von dem Tastverhältnis des PWM-Signals "Burst" von hochfrequenten Schaltvorgängen des Wechselrichters HS, LS ergeben, die von einer Totzeit unterbrochen sind, in denen eben kein Schaltbetrieb der Schalter HS, LS des Wechselrichters vorliegt. Gemäß der Erfindung liegt also eine fremdgesteuerte Halbbrücke HS, LS vor, da die Ansteuersignale von einer Steuerschaltung ST erzeugt werden. Durch eine Mischung der Veränderung der Halbbrückenfrequenz und des Tastverhältnisses des überlagerten PWM-Signals (Burst-Modes) kann ein Dimmen der LED-Strecke, also eine Veränderung des Stroms durch die LED-Strecke erreicht werden.

Darüber hinaus kann auch die Phasenlage zwischen der hochfrequenten Halbbrückenfrequenz und der niederfrequenten PWM-Modulation der Strom durch die LED-Strecke verändert werden.

Nicht erfindungsgemäß ist ein Betrieb möglich, bei der die Frequenz der hochfrequenten Taktung des Halbbrücken-Wechselrichters fixfrequent ist. Ein Dimmen wird dann mittels Rückführregelung (mittels des Signals beispielsweise von dem Messwiderstand oder Shunt R2) durch Veränderung des Tastverhältnisses der der hochfrequenten Taktung überlagerten PWM-Modulation und/oder eine Veränderung der Phasenlagen zwischen der PWM-Modulation und der hochfrequenten Taktung erreicht. Wie gesagt, die Veränderung für das Dimmen erfolgt dabei mittels Rückführregelung der PWM-Modulation auf einen veränderbaren Sollwert D.

Gemäß der Erfindung ist die hochfrequente Taktung nicht fixfrequent, sondern mittels reiner Vorwärtssteuerung einstellbar. Diese Einstellung kann beispielsweise abhängig von einem externen Signal B oder aber auch zur Anpassung abhängig von der Identifikation der verwendeten LED-Strecke (LED-Modul) erfolgen. Wiederum kann zum Dimmen dann das Tastverhältnis der PWM-Modulation mittels Rückführregelung veränderbar sein, wobei für die Rückführregelung der Steuerschaltung ein einen Strom durch die LED wiedergebendes Signal zugeführt ist.

Auch nicht erfindungsgemäß hängt die Kombination hochfrequente Taktung/PWM-Modulation vom einzustellenden Dimmwert ab. Dazu wird der Gesamt-Dimmbereich in mehrere Dimmbereiche unterteilt. In wenigstens einem dieser Bereiche und genauer gesagt oberhalb eines vorgegebenen Dimm-Schwellenwerts oder unterhalb einer bestimmten Halbbrückenfrequenz (aber immer noch typischerweise oberhalb der Resonanzfrequenz) wird dabei die hochfrequente Taktung mit Rückführregelung auf einen vorgegebenen veränderbaren Sollwert D geregelt. Dabei wird die PWM-Modulation mit konstantem, beispielsweise 100% Tastverhältnis eingestellt, so dass also das Dimmen allein über die Veränderung der hochfrequenten Taktung erfolgt.

In einem weiteren Dimmbereich unterhalb eines vorgegebenen Dimm-Schwellenwerts beziehungsweise oberhalb einer bestimmten Halbbrückenfrequenz kann die hochfrequente Taktung fixfrequent eingestellt sein. Dabei erfolgt dann das Dimmen einer an den Anschlüssen verbundenen LED-Last mittels Rückführregelung wenigstens eines Parameters der PWM-Modulation auf einen veränderbaren Sollwert D. Als Parameter der PWM-Modulation kommt beispielsweise das Tastverhältnis (duty-cycle) der PWM-Modulation und/oder die Phasenlage der zwischen der PWM-Modulation und den hochfrequenten Schaltvorgängen der Halbbrücken-Schaltung in Frage. Für die Rückführregelung wird die Steuerschaltung ein einen Strom durch die LED-Last wiedergebendes Signal zurückgeführt.

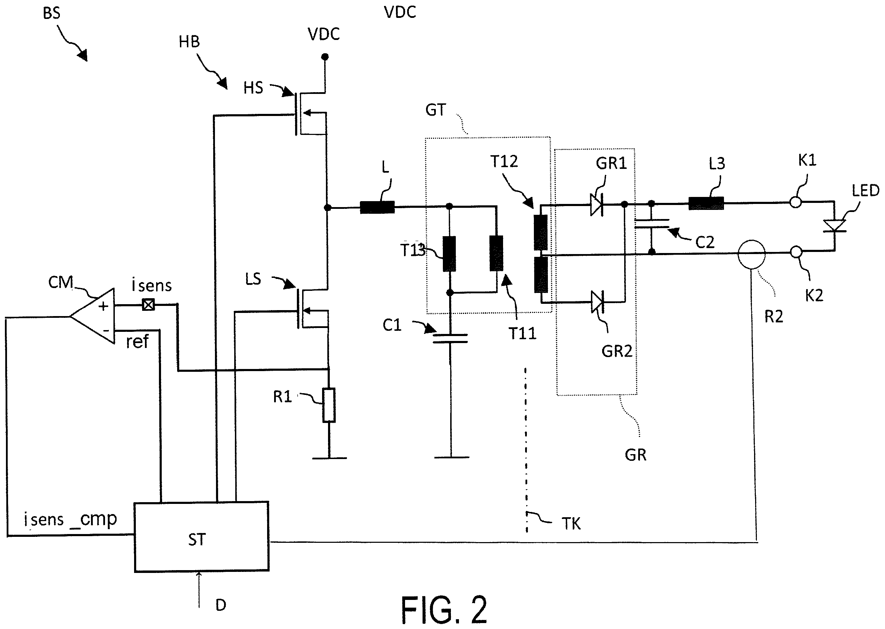

FIG. 2 ist ein Schaltbild einer Betriebsschaltung BS nach einem Ausführungsbeispiel. Die Betriebsschaltung BS umfasst eine Halbbrückenschaltung HB mit den beiden in Serie geschalteten Schaltern HS und LS als primärseitige Schaltung und eine sekundärseitige Schaltung. Es liegt Potentialtrennung zwischen der primärseitigen Schaltung und der sekundärseitigen Schaltung vor. Zur Trennung kann ein Transformator GT mit einer Primärspule T11 und einer Sekundärspule T12 vorgesehen sein. Der Transformator GT weist eine Hauptinduktivität auf, die auch als eine der Induktivitäten eines LLC-Resonanzkreises wirken kann. Diese ist in der FIG. 2 symbolisch als zweite Induktivität T13 dargestellt. Der Betriebsschaltung BS kann bei einem LED-Konverter oder bei einem anderen Betriebsgerät zum Betreiben von LEDs verwendet werden. Die Betriebsschaltung BS wirkt als DC/DC-Wandler. Die primärseitige Schaltung kann ein nicht-SELV-Bereich sein und die sekundärseitige Schaltung kann ein SELV-Bereich sein, die durch eine SELV-Barriere TK getrennt sind.

Die primärseitige Schaltung umfasst einen LLC-Resonanzkreis, der als Serienresonanzkreis ausgestaltet ist. Der LLC-Resonanzkreis weist eine erste Induktivität L (als diskrete Resonanzdrossel), eine zweite Induktivität T13 und eine Kapazität C1 in einer Serienschaltung auf. Die zweite Induktivität T13 ist wie gesagt die Streuinduktivität der Primärspule T11. Das zweite induktive Element 26 repräsentiert wie gesagt die Hauptinduktivität der Primärspule T11 des Transformators GT. Das zweite induktive Element T13 kann die Haupt-Induktivität des Resonanzkreises sein, deren Induktivität größer als die erste Induktivität L ist. Auch die erste Induktivität L kann in den Transformator integriert sein und beispielsweise eine Streuinduktivität sein. Alternativ kann auch eine zusätzliche Induktivität zusätzlich zu der Primärspule T11 des Transformators GT angeordnet werden und auch als eine der zwei Induktivitäten des LLC-Resonanzkreises wirken. Andere Ausgestaltungen des LLC-Resonanzkreises sind ebenfalls möglich. Beispielsweise kann die Kapazität C1 zwischen die erste Induktivität L und die zweiten Induktivität T geschaltet sein.

Die primärseitige Schaltung umfasst eine Halbbrückenschaltung HB mit einem ersten Schalter HS, der ein Leistungsschalter sein kann, und einem zweiten Schalter LS, der ein Leistungsschalter sein kann. Der erste Schalter HS und der zweite Schalter LS können identisch sein, und die Halbbrückenschaltung kann als symmetrische Halbbrückenschaltung ausgebildet sein. Ein Messwiderstand R1 ist mit dem ersten Schalter HS und dem zweiten Schalter LS in Serie geschaltet. Der Resonanzkreis ist mit einem Knoten zwischen dem ersten Schalter HS und dem zweiten Schalter LS verbunden. Der Resonanzkreis ist mit der Mitte der Halbbrückenschaltung zwischen den zwei Schaltern HS und LS verbunden. Ein erster Anschluss der ersten Induktivität L des Resonanzkreises kann mit dem Knoten zwischen dem ersten Schalter HS und dem zweiten Schalter LS der Halbbrückenschaltung HB verbunden sein. Ein zweiter Anschluss der ersten Induktivität L kann mit einem ersten Anschluss der zweiten Induktivität T13 des Resonanzkreises verbunden sein. Ein zweiter Anschluss der zweiten Induktivität T13 des Resonanzkreises kann mit einem ersten Anschluss der Kapazität C1 verbunden sein.

Im Betrieb der Betriebsschaltung BS steuert die Steuerschaltung ST den ersten Schalter HS und den zweiten Schalter LS. Die Steuereinheit ST ist dazu ausgelegt, neben der hochfrequenten Ansteuerung des Halbbrücken-Wechselrichters HS, LS ein in Vergleich dazu niederfrequentes PWM-Signal zum Überlagen (aufzumodulieren), so dass sich abhängig von dem Tastverhältnis des PWM-Signals "Burst" von hochfrequenten Schaltvorgängen des Wechselrichters HS, LS ergeben Bei der hochfrequenten Ansteuerung des Halbbrücken-Wechselrichters HS, LS kann jeder der Schalter jeweils mit derselben vorgegebenen Frequenz ein- und ausgeschaltet werden. Die Steuerschaltung ST steuert den ersten Schalter HS und den zweiten Schalter LS so, dass immer nur einer der beiden Schalter leitend geschaltet ist. Der erste Schalter HS und der zweite Schalter LS werden von der Steuerschaltung ST wechselseitig getaktet betrieben. Die Halbbrückentotzeit zwischen dem hochfrequenten Ausschalten eines Schalters und dem Einschalten des jeweils anderen Schalters kann klein sein, insbesondere viel kleiner als das Inverse der Schaltfrequenz. Der Steuerschaltung ST können externe oder interne Dimmsignale D zugeführt werden, die als Sollwert für den Strom durch eine LED-Strecke LED dienen.

Nicht erfindungsgemäß kann zumindest bei einem Betrieb in einem Dimmbereich oberhalb eines vorgegebenen Dimm-Schwellenwerts bzw. unterhalb einer bestimmten Halbbrückenfrequenz die Frequenz, mit der der erste Schalter HS und der zweite Schalter LS geschaltet werden, kann von der Steuerschaltung ST geregelt werden, um einen an einem Ausgang K1 der Betriebsschaltung für eine Last LED bereitgestellten Strom auf einem bestimmten Sollwert einzustellen. Die Steuerschaltung ST kann so eingerichtet sein, dass die Frequenz, mit der der erste Schalter HS und der zweite Schalter LS geschaltet werden, abhängig von einem erfassten Halbbrückenstrom durch den Messwiderstand R1 eingestellt wird, wie noch näher beschrieben werden wird. Weiterhin kann auch ein Rückführsignal ausgehend von einem Shunt R2 in Serie zur LED-Strecke LED zurückgeführt werden, wobei das letztere Messsignal also den Strom durch die LED-Strecke wiedergibt. In einem weiteren Dimmbereich unterhalb eines vorgegebenen Dimm-Schwellenwerts beziehungsweise oberhalb einer bestimmten Halbbrückenfrequenz kann die hochfrequente Taktung der beiden Schalter HS und LS fixfrequent eingestellt sein.

Die Steuereinheit ST ist dazu ausgelegt, neben der hochfrequenten Ansteuerung des Halbbrücken-Wechselrichters HS, LS ein in Vergleich dazu niederfrequentes PWM-Signal zum Überlagen (aufzumodulieren), so dass sich abhängig von dem Tastverhältnis des PWM-Signals "Burst" von hochfrequenten Schaltvorgängen des Wechselrichters HS, LS ergeben, die von einer Totzeit unterbrochen sind, in denen eben kein Schaltbetrieb der Schalter HS, LS des Wechselrichters vorliegt.

Wie in FIG. 2 dargestellt, weist die sekundärseitige Schaltung einen der Sekundärspule T12 nachgeschalteten Gleichrichterschaltung GR auf, der beispielsweise durch eine erste Diode GR1 und eine zweite Diode GR2 gebildet sein kann. Eine Mitte der Sekundärspule T12 kann mit einem Ausgang der sekundärseitigen Schaltung gekoppelt sein. Enden der Sekundärspule T12 können über die Dioden GR1 und GR2 mit dem Ausgang K1 gekoppelt sein. Zur Glättung des Ausgangsstroms kann ein induktives Element L3, beispielsweise eine Spule, vorgesehen sein, durch das dem Ausgang K1 Strom zugeführt wird. Ein weiterer Kondensator C2 kann zwischen die Ausgänge des Gleichrichters geschaltet sein. Der weitere Kondensator C2 kann eine verhältnismäßig kleine Kapazität aufweisen. Durch die Ausgestaltung der sekundärseitigen Schaltung mit dem induktiven Element L3 kann der Betriebsschaltung BS als Konstantstromquelle betrieben werden.

Eine mit dem Ausgang K1 verbundene Last LED kann ein LED, eine LED-Strecke mehrere LEDs oder mehrere LED-Strecken umfassen. Die LEDs können in ein LED-Modul integriert sein.

Eine Regelung des Ausgangsstroms am Ausgang K1 der Betriebsschaltung BS erfolgt abhängig von einem primärseitig gemessenen Halbbrückenstrom und durch Steuerung der primärseitigen Schalter der Halbrückenschaltung.

Als Regelgröße kann der Spitzenstrom durch den Messwiderstand R1 oder der Mittelwert des Stromes durch den Messwiderstand R1 verwendet werden. Der Spitzenstrom durch den Messwiderstand R1 steht bei der Betriebsschaltung BS in einer bekannten Beziehung zu dem Ausgangsstrom an dem Ausgang K1 der Betriebschaltung. Entsprechend kann der Spitzenstrom durch den Messwiderstand R1, der primärseitig erfassbar ist, verwendet werden, um den Ausgangsstrom der Betriebsschaltung BS zu regeln und den Betriebsschaltung BS als stromkonstantes Gerät zu betreiben. Abhängig von der primärseitig erfassten Regelgröße kann die Halbbrücke entsprechend angesteuert werden, um den Ausgangsstrom zu regeln. Es ist nicht erforderlich, zur Regelung des Ausgangsstroms sekundärseitige Schalter vorzusehen. Durch eine Mischung der Veränderung der Halbbrückenfrequenz und des Tastverhältnisses des überlagerten PWM-Signals (Burst-Modes) kann ein Dimmen der LED-Strecke, also eine Veränderung des Stroms durch die LED-Strecke erreicht werden. Darüber hinaus kann auch die Phasenlage zwischen der hochfrequenten Halbbrückenfrequenz und der niederfrequenten PWM-Modulation der Strom durch die LED-Strecke verändert werden.

Die Betriebsschaltung BS kann so eingerichtet sein, dass der erfasste Halbbrückenstrom isens durch den Messwiderstand R1 mit einer Referenz ref verglichen wird. Dazu kann ein Komparator CM vorgesehen sein. Einem ersten Eingang des Komparators CM wird ein Signal zugeführt, das proportional zu einem Strom durch den Messwiderstand R1 ist. Einem zweiten Eingang des Komparators wird die Referenz ref zugeführt. Die Referenz ref kann beispielsweise von der Steuerschaltung ST erzeugt werden. Ein Ausgangssignal isens_cmp des Komparators CM kann anzeigen, ob der erfasste Halbbrückenstrom durch den Messwiderstand R1 die Referenz ref übersteigt. Abhängig davon, ob der erfasste Halbbrückenstrom durch den Messwiderstand R1 die Referenz ref übersteigt, kann die Steuerschaltung ST die Frequenz anpassen, mit der der erste Schalter HS und der zweite Schalter LS geschaltet werden. Die Regelung des Ausgangsstroms der Betriebsschaltung BS erfolgt abhängig von dem primärseitig erfassten Spitzenstrom isens und durch Ansteuerung der Halbbrückenschaltung in der primärseitigen Schaltung, wobei eine Mischung der Veränderung der Halbbrückenfrequenz und des Tastverhältnisses des überlagerten PWM-Signals (Burst-Modes) erfolgen kann. Dadurch kann ein Dimmen der LED-Strecke, also eine Veränderung des Stroms durch die LED-Strecke erreicht werden.

Die Anpassung der Frequenz, mit der der erste Schalter HS und der zweite Schalter LS, geschaltet werden, kann von der Steuerschaltung ST durch Verwendung vorgegebener Frequenz- oder Zeitinkremente und/oder kennfeldbasiert erfolgen. Die Steuerschaltung ST kann als integrierte Halbleiter-schaltung ausgestaltet sein, die eine anwendungsspezifische Spezialschaltung sein kann. Die Steuerschaltung ST kann insbesondere als ASIC ("Application Specific Integrated Circuit") ausgestaltet sein. Die Steuerschaltung ST kann auch als programmierbare Schaltung ausgestaltet sein, die durch Firmware oder Software so programmiert ist, dass sie die Steuerung der Halbbrückenschaltung abhängig von dem erfassten Halbbrückenstrom durch den Messwiderstand R1 und den Vorgaben aufgrund externer oder interner Dimmsignale D anpasst.

Die Betriebsschaltung gemäß einem Ausführungsbeispiel dieser Erfindung kann Teil eines Beleuchtungssystems sein, bei dem ein Betriebsgerät LEDs mit Energie versorgt. Das Betriebsgerät kann als LED-Konverter ausgestaltet sein und eine erfindungsgemäße Betriebsschaltung BS aufweisen. Der LED-Konverter kann als Konstantstromquelle ausgebildet sein. Der LED-Konverter kann so ausgestaltet sein, dass die Helligkeit der LEDs über Befehle, die beispielsweise über einen Bus oder drahtlos als Dimmsignale D übertragen werden, einstellbar ist. Der LED-Konverter kann eine entsprechende Schnittstelle zur Kommunikation mit einem zentralen Steuergerät umfassen und eingerichtet sein, um über die Schnittstelle Dimmsignale D zu empfangen und um über die Schnittstelle Informationen über den Betriebszustand des LED-Konverters und/oder der LEDs auszugeben.

Der LED-Konverter kann als SELV-Gerät ausgestaltet sein, bei der eine primärseitige Schaltung (beispielsweise eine nicht-SELV-Seite) und eine sekundärseitige Schaltung (beispielsweise eine SELV-Seite) galvanisch getrennt sind. Der LED-Konverter kann einen AC/DC-Wandler umfassen. Der AC/DC-Wandler kann eingerichtet sein, um eingangsseitig mit einer Netzspannung gekoppelt zu werden. Der AC/DC-Wandler kann als so genannte Glättungsschaltung oder Schaltung zur Leistungsfaktorkorrektur (PFC) ausgestaltet sein. Der AC/DC-Wandler stellt eine Busspannung VDC an die Betriebsschaltung BS bereit, der eine eingangs- bzw. primärseitige Schaltung und eine davon galvanisch getrennte ausgangs- bzw. sekundärseitige Schaltung aufweist. Eine galvanische Trennung wird durch einen Transformator GT oder anderen Umsetzer erreicht.

Die Erfindung betrifft auch ein Verfahren zum Betreiben einer LED-Last durch eine Halbbrückenschaltung mit zwei in Serie geschalteten Schaltern und einen vom Mittenpunkt der beiden Schalter aus versorgten Serienresonanzkreis, wobei die Schalter der Halbbrücke hochfrequent getaktet werden, wobei der hochfrequenten Taktung der Schalter der Halbbrücke eine im Vergleich dazu niederfrequente PWM-Modulation überlagert wird, wobei die hochfrequente Taktung mittels Vorwärtssteuerung einstellbar ist, und das Tastverhältnis der PWM-Modulation mittels Rückführregelung verändert wird, wobei der Rückführregelung ein einen Strom durch die LED wiedergebendes Signal zugeführt wird.

## Patentansprüche

1. Betriebsschaltung (BS) für eine LED-Last, aufweisend:
- eine Halbbrückenschaltung (HB) mit zwei in Serie geschalteten Schaltern (HS, LS),
- einen vom Mittenpunkt der beiden Schalter (HS, LS) aus versorgten Serienresonanzkreis,
- einen Transformator (GT), dessen Streuinduktivität Teil des Resonanzkreises ist, oder der mit einer diskreten Resonanzdrossel in Serie liegt und von dessen Sekundärseite aus Anschlüsse für eine LED-Last (LED) versorgt sind,
- eine Steuerschaltung (ST), die dazu eingerichtet ist, die Schalter (HS, LS) der Halbbrücke hochfrequent zu takten und die Steuerschaltung (ST) ferner dazu eingerichtet ist, der hochfrequenten Taktung eine im Vergleich dazu niederfrequente PWM-Modulation zu überlagern, und die hochfrequente Taktung mittels Vorwärtssteuerung einzustellen und das Tastverhältnis der PWM-Modulation mittels Rückführregelung zu verändern, wobei für die Rückführregelung der Steuerschaltung (ST) ein einen Strom durch die LED wiedergebendes Signal zugeführt ist.

2. Betriebsschaltung (BS) nach einem der vorhergehenden Ansprüche, wobei die hochfrequente Taktung der Schalter (HS, LS) in einem Bereich zwischen 0.5 und 4MHz, vorzugsweise 0,5 bis 2,5 MHz liegt.

3. Betriebsschaltung (BS) nach einem der vorhergehenden Ansprüche, bei der die Frequenz der PWM-Modulation in einem Bereich von 10 bis 50 kHz, vorzugsweise 15 bis 25 kHz liegt.

4. Betriebsschaltung (BS) nach einem der vorhergehenden Ansprüche, bei der die Steuerschaltung (ST) ein Mikrokontroller, ein CMIC (Configurable Mixed Mode Integrated Circuit) oder ein ASIC ist.

5. Betriebsschaltung (BS) nach einem der vorhergehenden Ansprüche, wobei der Resonanzkreis (T11, T13; L, C1) ein induktives Element (L) und ein kapazitives Element (C1) umfasst, die mit einer Primärspule (T11) eines Transformators in Serie geschaltet sind.

6. Betriebsschaltung (BS) nach einem der vorhergehenden Ansprüche,
wobei die Betriebsschaltung eine sekundärseitige Schaltung ein mit einem Ausgang (K1, K2) verbundenes weiteres induktives Element (L3) umfasst.

7. Betriebsschaltung (BS) nach einem der vorhergehenden Ansprüche, welche als Konstantstromquelle ausgestaltet ist.

8. LED-Beleuchtungseinheit mit einer Betriebsschaltung (BS) nach einem der Ansprüche 1 bis 7, und einer LED-Last (LED).

9. Verfahren zum Betreiben einer LED-Last durch eine Halbbrückenschaltung (HB) mit zwei in Serie geschalteten Schaltern (HS, LS) und einen vom Mittenpunkt der beiden Schalter (HS, LS) aus versorgten Serienresonanzkreis, wobei die Schalter (HS, LS) der Halbbrücke hochfrequent getaktet werden, wobei der hochfrequenten Taktung der Schalter (HS, LS) der Halbbrücke eine im Vergleich dazu niederfrequente PWM-Modulation überlagert wird, wobei die hochfrequente Taktung mittels Vorwärtssteuerung einstellbar ist, und das Tastverhältnis der PWM-Modulation mittels Rückführregelung verändert wird, wobei der Rückführregelung ein einen Strom durch die LED wiedergebendes Signal zugeführt wird.

## Claims

1. Operating circuit (BS) for an LED load, comprising:
- a half-bridge circuit (HB) having two switches (HS, LS) connected in series,
- a series resonant circuit supplied from the center point of the two switches (HS, LS),
- a transformer (GT), the leakage inductance of which is part of the resonant circuit, or which is arranged in series with a discrete resonant choke, and from the secondary side of which connections for an LED load (LED) are supplied,
- a control circuit (ST) which is designed to clock the switches (HS, LS) of the half-bridge at a high frequency, and the control circuit (ST) is further designed to superimpose, on the high-frequency clocking, a PWM modulation of a low frequency in comparison thereto,
and to adjust the high-frequency clocking by means of feedforward control and to change the duty cycle of the PWM modulation by means of feedback control, wherein a signal representing a current through the LED is fed to the control circuit (ST) for the feedback control.

2. Operating circuit (BS) according to any of the preceding claims,
wherein the high-frequency clocking of the switches (HS, LS) is in a range between 0.5 and 4 MHz, preferably 0.5 to 2.5 MHz.

3. Operating circuit (BS) according to either of the preceding claims,
in which the frequency of the PWM modulation is in a range of 10 to 50 kHz, preferably 15 to 25 kHz.

4. Operating circuit (BS) according to any of the preceding claims,
in which the control circuit (ST) is a microcontroller, a CMIC (Configurable Mixed Mode Integrated Circuit) or an ASIC.

5. Operating circuit (BS) according to any of the preceding claims,
wherein the resonant circuit (T11, T13; L, C1) comprises an inductive element (L) and a capacitive element (C1) which are connected in series with a primary coil (T11) of a transformer.

6. Operating circuit (BS) according to any of the preceding claims,
wherein the operating circuit comprises a secondary-side circuit a further inductive element (L3) connected to an output (K1, K2).

7. Operating circuit (BS) according to any of the preceding claims, which is designed as a constant current source.

8. LED lighting unit having an operating circuit (BS) according to any of claims 1 to 7, and an LED load (LED).

9. Method for operating an LED load by means of a half-bridge circuit (HB) having two switches (HS, LS) connected in series and a series resonant circuit supplied from the center point of the two switches (HS, LS), wherein the switches (HS, LS) of the half-bridge are clocked at a high frequency, wherein the high-frequency clocking of the switches (HS, LS) of the half-bridge is superimposed with a PWM modulation of a low frequency in comparison thereto, wherein the high-frequency clocking is adjustable by means of feedforward control, and the duty cycle of the PWM modulation is changed by means of feedback control, wherein the feedback control is supplied with a signal representing a current through the LED.

## Revendications

1. Circuit de fonctionnement (BS) pour une charge DEL, présentant :
- un circuit en demi-pont (HB) comportant deux commutateurs (HS, LS) commutés en série,
- un circuit de résonance série alimenté par le point central des deux interrupteurs (HS, LS),
- un transformateur (GT) dont l'inductance de fuite fait partie du circuit de résonance ou qui est en série avec une bobine de résonance discrète et à partir du côté secondaire duquel sont alimentées des connexions pour une charge DEL (LED),
- un circuit de commande (ST) qui est conçu pour cadencer à haute fréquence les commutateurs (HS, LS) du demi-pont et le circuit de commande (ST) est en outre conçu pour superposer à la cadence à haute fréquence une modulation PWM (de largeur d'impulsion) à plus basse fréquence par rapport à celle-ci,
et pour régler la cadence à haute fréquence à l'aide d'une commande à action directe et modifier le rapport d'impulsions de la modulation PWM à l'aide d'une régulation par rétroaction, un signal reflétant un courant à travers la DEL étant amené au circuit de commande (ST) pour la régulation par rétroaction.

2. Circuit de fonctionnement (BS) selon l'une des revendications précédentes,
la cadence à haute fréquence des commutateurs (HS, LS) se situant dans une plage entre 0,5 et 4 MHz, de préférence entre 0,5 et 2,5 MHz.

3. Circuit de fonctionnement (BS) selon l'une des revendications précédentes,
dans lequel la fréquence de la modulation PWM se situe dans une plage de 10 à 50 kHz, de préférence de 15 à 25 kHz.

4. Circuit de fonctionnement (BS) selon l'une des revendications précédentes,
dans lequel le circuit de commande (ST) est un microcontrôleur, un CMIC (Configurable Mixed Mode Integrated Circuit) ou un ASIC.

5. Circuit de fonctionnement (BS) selon l'une des revendications précédentes,
dans lequel le circuit de résonance (T11, T13 ; L, C1) comprend un élément inductif (L) et un élément capacitif (C1) qui sont commutés en série avec une bobine primaire (T11) d'un transformateur.

6. Circuit de fonctionnement (BS) selon l'une des revendications précédentes,
dans lequel le circuit de fonctionnement comprend un circuit côté secondaire un autre élément inductif (L3) connecté à une sortie (K1, K2).

7. Circuit de fonctionnement (BS) selon l'une des revendications précédentes, qui est conçu comme une source de courant constant.

8. Unité d'éclairage à DEL comportant un circuit de fonctionnement (BS) selon l'une des revendications 1 à 7 et une charge DEL (LED).

9. Procédé destiné à faire fonctionner une charge DEL par un circuit en demi-pont (HB) comportant deux commutateurs (HS, LS) commutés en série et un circuit de résonance série alimenté à partir du point central des deux commutateurs (HS, LS), les commutateurs (HS, LS) du demi-pont étant cadencés à haute fréquence, la cadence à haute fréquence des commutateurs (HS, LS) du demi-pont étant superposée d'une modulation PWM à plus basse fréquence par rapport à celle-ci, la cadence à haute fréquence étant réglable à l'aide d'une commande à action directe et le rapport d'impulsions de la modulation PWM étant modifié à l'aide d'une régulation par rétroaction, un signal reflétant un courant à travers la DEL étant amené à la régulation par rétroaction.
